Europäisches Patentamt

European Patent Office

Office européen des brevets

(19)

(11) Veröffentlichungsnummer : **0 142 775**
**B1**

# (12) EUROPÄISCHE PATENTSCHRIFT

(45) Veröffentlichungstag der Patentschrift :
30.12.86

(21) Anmeldenummer : 84113407.5

(22) Anmeldetag : 07.11.84

(51) Int. Cl.⁴ : **C 09 C 1/24**, C 01 G 49/08

(54) **Farbstarke Eisenoxidschwarzpigmente, Verfahren zu ihrer Herstellung sowie deren Verwendung.**

(30) Priorität : 19.11.83 DE 3341885

(43) Veröffentlichungstag der Anmeldung :
29.05.85 Patentblatt 85/22

(45) Bekanntmachung des Hinweises auf die Patenterteilung : 30.12.86 Patentblatt 86/52

(84) Benannte Vertragsstaaten :
DE GB IT

(56) Entgegenhaltungen :
FR-A- 2 261 980
CHEMICAL ABSTRACTS, Band 82, Nr. 8, 24. Februar 1975, Seite 168, Nr. 45924p, Columbus, Ohio, US

(73) Patentinhaber : BAYER AG
Konzernverwaltung RP Patentabteilung
D-5090 Leverkusen 1 Bayerwerk (DE)

(72) Erfinder : Rademachers, Jakob, Dr.
Hoeninghausstrasse 34
D-4150 Krefeld 12 (DE)
Erfinder : Naumann, Rolf, Dr.
Scheiblerstrasse 89
D-4150 Krefeld 1 (DE)
Erfinder : Teichmann, Günther, Dr.
Kruse Bömke 3
D-4150 Krefeld 1 (DE)

EP 0 142 775 B1

## Beschreibung

Die vorliegende Erfindung betrifft neue anisometrische Eisenoxidschwarzpigmente hoher Reinheit und Farbstärke, Verfahren zur Herstellung dieser Eisenoxidschwarzpigmente sowie deren Verwendung zur Einfärbung von Substraten.

Eisenoxidschwarzpigmente bestehen aus Mischoxiden des zwei- und dreiwertigen Eisens entsprechend der Magnetit-Zusammensetzung $Fe_3O_4$. Sie können entweder durch Oxidation von metallischem oder zweiwertigem Eisen oder durch Reduktion von dreiwertigem Eisen hergestellt werden.

Die Herstellung von Magnetiten durch Reduktion von Eisen(III)-Verbindungen ist bevorzugt auf dem Magnetpigment-Gebiet bekannt geworden, wobei insbesondere nadelförmige Magnetite entweder direkt als Magnetpigment eingesetzt werden oder als Zwischenprodukt für die Herstellung von ferrimagnetischen $\gamma$-$Fe_2O_3$ dienen (Ullmanns Encylopädie der technischen Chemie, 4. Aufl. Band 18, S. 643, Verlag Chemie, Weinheim, 1979). Derartig hergestellte Magnetite zeigen keinen reinen Farbton oder besondere Farbstärke. In der Technik sind sie deshalb nicht als Farbpigmente bekannt geworden.

Die im technischen Maßstab nach dem Anilinverfahren durch Oxidation von metallischem Eisen erhaltenen Eisenoxidschwarzpigmente zeigen bei höherer Farbstärke einen zunehmenden Braunstich, der auf einem erhöhten Feinanteil in der Primärkornverteilung zurückzuführen ist.

Die isometrischen Eisenoxidschwarzpigmente, die im neutralen bis schwach basischem Gebiet aus technischen Eisensalzlösungen durch Fällung und Oxidation erhalten werden, zeigen den Nachteil, daß sie die in den Lösungen enthaltenen Begleitmetalle in ihr Gitter leicht einbauen. Vor allen Dingen werden die häufig bei Eisensalzlösungen anzutreffenden Mangan-Verunreinigungen vollständig eingebaut, wodurch ebenfalls ein Braunstich des Schwarzpigmentes hervorgerufen wird.

Die Aufgabe der vorliegenden Erfindung besteht nunmehr darin, anisometrische Eisenoxidschwarzpigmente mit hoher Farbstärke und reinem Farbton zur Verfügung zu stellen.

Diese Anforderungen werden erfüllt durch Schwarzpigmente auf Eisenoxidbasis, die aus anisometrischen Magnetiten mit einem mittleren Nadeldurchmesser von 0,1 bis 0,2 $\mu$m und einer mittleren Nadellänge von 0,6 bis 0,8 $\mu$m bestehen, eine spezifische Oberfläche nach BET von 5 bis 15 m²/g, einen FeO-Gehalt von 26 bis 29 Gew.-% und einen Mangangehalt von kleiner als 0,1 Gew.-%, bezogen auf das Schwarzpigment, aufweisen.

Besonders bevorzugt sind dabei solche Schwarzpigmente, deren spezifische Oberfläche nach BET 7 bis 10 m²/g beträgt.

Eine weitere Aufgabe dieser Erfindung besteht darin, Schwarzpigmente hoher Reinheit zu entwickeln, die zur Einfärbung von Substraten im Lebensmittelbereich wie Verpackungsmaterialien oder für Kosmetika geeignet sind.

Diese Anforderungen werden erfüllt durch Pigmente, die neben den genannten Eigenschaften den Anforderungen genügen daß ihr Gehalt an Kupfer, Antimon, Chrom, Zink, Bariumsulfat jeweils kleiner als 0,01 Gew.-%, zusammen nicht mehr als 0,02 Gew.-%, der Gehalt an Blei kleiner als 0,002 Gew.-%, der Gehalt an Arsen, Selen, Quecksilber kleiner als 0,000 1 Gew.-% und der Gehalt an Cadmium, Tellur, Tallium, Uran und Chromat(VI) kleiner als 0,000 05 Gew.-% beträgt.

Gegenstand der vorliegenden Erfindung ist auch ein Verfahren zur Herstellung der erfindungsgemäßen Schwarzpigmente. Dieses ist dadurch gekennzeichnet, daß $\alpha$-FeOOH mit einer spezifischen Oberfläche nach BET von 10 bis 20 m²/g und mit mittleren Nadelbreiten von 0,1 bis 0,2 $\mu$m sowie mittleren Nadellängen von 0,6 bis 0,8 $\mu$m, das aus Eisensalzlösungen durch Versetzen mit Alkali und anschließender Oxidation in zwei Stufen, nämlich der Keimbildungs- und der Pigmentwachstumsstufe erhalten wird, bei 350 °C bis 500 °C, vorzugsweise bei 400 °C bis 450 °C, reduziert, anschließend bei 25 °C bis 250 °C, vorzugsweise bei 100 °C bis 200 °C, in einer Atmosphäre mit niedrigem Sauerstoff-Partialdruck passiviert und schließlich gemahlen wird.

Durch diese Maßnahme bleibt ein großer Teil der in den Eisensalzlösungen enthaltenen Verunreinigungen, vor allen Dingen Mangan, in Lösung, so daß insbesondere bei den feinteiligen, farbstarken Schwarzpigmenten kein Braunstich mehr zu beobachten ist. Es hat sich herausgestellt, daß ein Mangan-Gehalt unterhalb 0,1 Gew.-% keinen Einfluß mehr auf den Farbton ausübt. Ferner wurde überraschend festgestellt, daß höhere Farbstärken bei niedrigen spezifischen Oberflächen erzielt werden können, was zu thermostabilen Produkten führt. So können bei spezifischen Oberflächen nach BET von 8 m²/g wesentlich höhere Farbstärken von über 50 % erreicht werden, verglichen mit Anilinschwarzpigmenten, die spezifische Oberflächen nach BET von etwa 15 m²/g aufweisen.

Als Ausgangsmaterialien für die Herstellung der erfindungsgemäßen Pigmente dienen technische Eisensalzlösungen, insbesondere Eisensulfat- oder Eisenchloridlösungen. Vorzugsweise werden Eisensulfate eingesetzt, die als Heptahydrat bei den Beizereien anfallen. Bei zu hohem Gehalt an dreiwertigen Metallen ist es zweckmäßig, eine Fällung dieser Verunreinigungen durch Einstellen des pH-Wertes auf 4,5 vorzuschalten.

Die Gewinnung des $\alpha$-FeOOH aus diesen Lösungen erfolgt in der ersten Stufe, der Keimherstellung, durch Zugabe von Alkalien, z. B. Natronlauge, Sodalösung oder Magnesit, in einer Menge, daß etwa die Hälfte des Eisens als Hydroxid gefällt wird. Anschließend wird dieser Anteil zum FeOOH oxidiert, vorzugsweise durch Begasen in Rührbehältern mit Luft. Auch kann die Oxidation mit anderen

2

Oxidationsmitteln wie Nitraten oder Peroxiden erfolgen. Nach Beendigung des Oxidationsvorganges, der bei 30 bis 35 °C abläuft, wird weitere Eisensulfatlösung zugefügt und die Suspension auf 70 bis 90 °C aufgeheizt. Die Oxidation erfolgt nun unter Konstanthaltung des pH-Wertes zwischen 3,5 und 4,5 durch Zusatz von Alkalien. Der Vorgang dieser Pigmentbildung wird durch Zugabe weiterer Eisensulfatlösung soweit geführt, bis die erwünschte mittlere Nadelbreite von 0,1 bis 0,2 $\mu$m und mittlere Nadellänge von 0,6 bis 0,8 $\mu$m bei einer spezifischen Oberfläche nach BET von 10 bis 20 m²/g erreicht ist. Im allgemeinen stellen sich diese für das Schwarzpigment günstige Bedingungen am $\alpha$-FeOOH bei einem Aufwachsfaktor zwischen 10 und 15 ein. Man erhält demnach das 10 bis 15-fache an Goethit bezogen auf die eingesetzte Keimmenge.

Nach Filtrieren, gründlichem Waschen und Trocknen erfolgt die Reduktion des $\alpha$-FeOOH zum $Fe_3O_4$. Dieser Verfahrensschritt wird vorzugsweise in indirekt beheizten Drehtrommeln oder Drehrohröfen durchgeführt. Als Reduktionsmittel dienen reduzierend wirkende Gase, beispielsweise Wasserstoff, Kohlenmonoxid oder Gemische der beiden. Die Reduktion soll möglichst schonend aber vollständig durchgeführt werden, damit keine Versinterungen der Pigmentkristalle auftreten. Andererseits soll eine Überreduktion vermieden werden. Die Reduktionstemperaturen liegen bei 350 °C bis 500 °C, vorzugsweise bei 400 °C bis 450 °C. Bei diesem Vorgang stellt sich unter Zusatz von Wasserdampf in Höhe von 10 bis 30 Vol.-% zum Wasserstoff ein FeO-Gehalt von 30 bis 31 Gew.-% ein. Das erhaltene Schwarzpigment ist in dieser Form oxidationsempfindlich. Durch Überleiten von Stickstoff mit etwa 10 Vol.-% Luft bei 25 °C bis 250 °C, vorzugsweise bei 100 °C bis 200 °C, wird durch Erniedrigung des FeO-Gehaltes auf 26 bis 29 Gew.-% das Pigment gegenüber Luftoxidation passiviert.

Die nach dem Mahlen erhaltenen Pigmente zeigen bei der objektiven Farbmessung und Auswertung im CIELAB-System (DIN 6174) deutlich geringere Buntheiten und höhere Farbstärken als marktübliche Schwarzpigmente. Sie sind deutlich blauschwärzer und zeigen keinen Braunstich.

In Folge ihrer Reinheit bezüglich der Begleitsubstanzen können sie nicht nur in Lacken oder Kunststoffen, sondern auch im Lebensmittelbereich, beispielsweise in Verpackungsmaterialien oder Kosmetika eingesetzt werden.

Anhand des nachfolgenden Beispiels wird die Erfindung näher erläutert.

## Beispiel

Eine wäßrige Lösung von aus Beizereien stammendem Eisensulfat mit 150 g/l $FeSO_4$ wird mit soviel 30 %iger Natronlauge unter Rühren versetzt, daß 40 % des Eisens als Eisen(III)hydroxid gefällt werden. Durch anschließendes Begasen mit Luft bei Temperaturen von 30 bis 35 °C wird das gefällte Eisen bis zur dreiwertigen Stufe oxidiert. Dabei fällt der pH-Wert von anfänglich 6 auf 3,5. Damit ist die Keimbildung beendet. Anschließend wird weiteres Eisensulfat zugeführt und die Suspension auf 80 °C erwärmt und bei Konstanthalten des pH-Wertes mit Natronlauge auf 4 weiter unter Rühren mit Luft begast. Dieser Vorgang wird soweit geführt, bis das 14-fache der bei der Keimbildung erhaltenen $\alpha$-FeOOH-Menge erreicht ist. Nach Filtrieren und Waschen auf einem Drehfilter wird der Filterkuchen sprühgetrocknet.

Der nun vorliegende Goethit mit einer BET-Oberfläche von 12 m²/g, einer Nadelbreite von 0,15 $\mu$m und einer Nadellänge von 0,7 $\mu$m wird in einem indirekt beheizten Drehrohrofen bei Innentemperaturen von 425 bis 450 °C mit Wasserstoff unter Zusatz von 20 Vol.-% Wasserdampf zum $Fe_3O_4$ mit einem FeO-Gehalt von 30,5 Gew.-% reduziert. Nach einer Zwischenkühlung erfolgt in einem weiteren Drehrohrofen bei 100 bis 150 °C eine Behandlung mit 10 % Luft enthaltendem Stickstoff in Gegenstromführung. Dabei erniedrigt sich der FeO-Gehalt auf 28 Gew.-%. Nach dem Mahlen in einer Pendelmühle erhält man ein oxidationsstabiles Schwarzpigment mit einer spezifischen Oberfläche nach BET von 8 m²/g, einer mittleren Nadelbreite von 0,15 $\mu$m und einer mittleren Nadellänge von 0,7 $\mu$m. Der Mangan-Gehalt beträgt 0,078 Gew.-%, der Zinkanteil liegt bei 0,006 Gew.-%, Kupfer und Chrom liegen jeweils bei 0,002 Gew.-%, Bariumsulfat bei 0,005 Gew.-%, Blei bei 0,000 8 Gew.-%, Antimon, Arsen, Selen und Quecksilber sowie Cadmium, Tellur, Tallium, Uran und Chromat (VI) jeweils kleiner als 0,000 05 Gew.-%. Die im Weißverschnitt (Abmischung des Schwarzpigmentes mit einem handelsüblichen Titandioxid-Weißpigment im Gewichtsverhältnis 1 : 5) nach DIN 53 236 gemessenen und nach DIN 6174 umgerechneten CIELAB-C/2grd-Farbwerte ergaben im Vergleich zum Handelsprodukt Bayferrox 318 im Alkyd-F48-Lack (beides Markenprodukte der BAYER AG) folgendes Bild :

| | |
|---|---|
| Unterschied Rot-grün-Anteil | $\Delta a^* = -0,2$ |
| Unterschied Gelb-blau-Anteil | $\Delta b^* = -1,1$ |
| Unterschied Buntheit | $\Delta c^*_{ab} = -1,1$ |
| Relative Farbstärke | % F rel = 180 |

Das erhaltene Schwarzpigment ist demnach deutlich blauschwärzer ohne Braunstich und besitzt eine um 80 % höhere Farbstärke als das Vergleichspigment, das eine spezifische Oberfläche nach BET von 14 m²/g aufweist.

**Patentansprüche**

1. Schwarzpigmente auf Eisenoxidbasis, dadurch gekennzeichnet, daß sie aus anisometrischen Magnetiten mit einem mittleren Nadeldurchmesser von 0,1 bis 0,2 $\mu$m und einer mittleren Nadellänge von 0,6 bis 0,8 $\mu$m bestehen, eine spezifische Oberfläche nach BET von 5 bis 15 m$^2$/g, einen FeO-Gehalt von 26 bis 29 Gew.-% und einen Mangan-Gehalt von kleiner als 0,1 Gew.-%, bezogen auf das Schwarzpigment, aufweisen.

2. Schwarzpigmente gemäß Anspruch 1, dadurch gekennzeichnet, daß die spezifische Oberfläche nach BET 7 bis 10 m$^2$/g beträgt.

3. Schwarzpigmente gemäß einem der Ansprüche 1 oder 2, dadurch gekennzeichnet, daß der Gehalt an Kupfer, Antimon, Chrom, Zink, Bariumsulfat jeweils kleiner als 0,01 Gew.-%, zusammen nicht mehr als 0,02 Gew.-%, der Gehalt an Blei kleiner als 0,002 Gew.-%, der Gehalt an Arsen, Selen, Quecksilber kleiner als 0,000 1 Gew.-% und der Gehalt an Cadmium, Tellur, Tallium, Uran und Chromat (VI) kleiner als 0,000 05 Gew.-% beträgt.

4. Verfahren zur Herstellung von Schwarzpigmenten auf Eisenoxidbasis gemäß einem der Ansprüche 1 bis 3, dadurch gekennzeichnet, daß $\alpha$-FeOOH mit spezifischen Oberflächen nach BET von 10 bis 20 m$^2$/g und mittleren Nadelbreiten von 0,1 bis 0,2 $\mu$m sowie mittleren Nadellängen von 0,6 bis 0,8 $\mu$m, erhalten aus Eisensalzlösungen durch Versetzen mit Alkali und anschließender Oxidation in zwei Stufen, nämlich der Keimbildungs- und der Pigmentwachstumsstufe, bei 350 bis 500 °C, vorzugsweise bei 400 bis 450 °C reduziert, anschließend bei 25 bis 250 °C, vorzugsweise bei 100 bis 200 °C, in einer Atmosphäre mit niedrigem Sauerstoffpartialdruck passiviert und schließlich gemahlen wird.

5. Verfahren zur Herstellung von Schwarzpigmenten auf Eisenoxidbasis gemäß Anspruch 4, dadurch gekennzeichnet, daß die Keimbildung der $\alpha$-FeOOH-Herstellung bei 30 bis 35 °C und die Pigmentbildung bei 70 bis 90 °C erfolgt.

6. Verfahren zur Herstellung von Schwarzpigmenten auf Eisenoxidbasis gemäß einem der Ansprüche 4 oder 5, dadurch gekennzeichnet, daß bei der $\alpha$-FeOOH-Bildung ein Aufwachsfaktor von 10 bis 15 eingehalten wird.

7. Verfahren zur Herstellung von Schwarzpigmenten auf Eisenoxidbasis gemäß einem der Ansprüche 4 bis 6, dadurch gekennzeichnet, daß die Reduktion des $\alpha$-FeOOH in einem Drehrohrofen mit Wasserstoff unter Zusatz von 10 bis 30, bevorzugt 15 bis 25 Vol.-% Wasserdampf erfolgt.

8. Verwendung der Schwarzpigmente gemäß einem oder mehrerer der Ansprüche 1 bis 7 zur Einfärbung von Substraten wie Lacken, Kunststoffen oder Baumaterialien.

9. Verwendung der Schwarzpigmente gemäß einem oder mehrerer der Ansprüche 3 bis 7 zur Einfärbung von Substraten wie Lebensmittelverpackungsmaterialien, Spielzeugen, Malfarben oder Kosmetika.

**Claims**

1. Black pigments based on iron oxide, characterised in that they consist of anisometric magnetites having an average needle diameter of 0.1 to 0.2 $\mu$m and an average needle length of 0.6 to 0.8 $\mu$m, and have a specific BET surface area of 5 to 15 m$^2$/g, a FeO content of 26 to 29 % by weight and a manganese content of less than 0.1 % by weight, based on the black pigment.

2. Black pigments according to Claim 1, characterised in that the specific BET surface area is 7 to 10 m$^2$/g.

3. Black pigments according to one of Claims 1 or 2, characterised in that the content of copper, antimony, chromium, zinc and barium sulphate is less than 0.1 % by weight, each, the total being no more than 0,02 % by weight, the content of lead is less than 0.002 % by weight, the content of arsenic, selenium and mercury is less than 0.000 1 % by weight and the content of cadmium, tellurium, thallium, uranium and chromate (VI) is less than 0.000 05 % by weight.

4. Process for the production of black pigments based on iron oxide according to one of Claims 1 to 3, characterised in that $\alpha$-FeOOH having specifice BET surface areas of 10 to 20 m$^2$/g and average needle widths of 0.1 to 0.2 $\mu$m and average needle lengths of 0.6 to 0.8 $\mu$m, obtained from iron salt solutions by adding an alkali thereto followed by oxidation in two stages, namely the nucleation stage and the pigment growth stage, is reduced at 350 to 500 °C, preferably at 400 to 450 °C, then passivated at 25 to 250 °C, preferably at 100 to 200 °C, in an atmosphere with a low oxygen partial pressure and finally milled.

5. Process for the production of black pigments based on iron oxide according to Claim 4, characterised in that the nucleation in the production of $\alpha$-FeOOH is carried out at 30 to 35 °C and the pigment formation is carried out at 70 to 90 °C.

6. Process for the production of black pigments based on iron oxide according to one of Claims 4 or 5, characterised in that a growth factor of 10 to 15 is adhered to in the formation of $\alpha$-FeOOH.

7. Process for the production of black pigments based on iron oxide according to one of Claims 4 to 6, characterised in that the reduction of the $\alpha$-FeOOH is carried out in a rotary kiln with hydrogen and with the addition of 10 to 30, preferably 15 to 25, volume % of steam.

8. Use of the black pigments according to one or more of Claims 1 to 7 for colouring substrates such as lacquers, plastics or building materials.

9. Use of the black pigments according to one or more of Claims 3 to 7 for colouring substrates such as food packaging materials, toys, painters' colours or cosmetics.

**Revendications**

1. Pigments noirs à base d'oxyde de fer, caractérisés en ce qu'ils sont constitués par des magnétites anisométriques ayant un diamètre moyen des aiguilles de 0,1 à 0,2 μm et une longueur moyenne des aiguilles de 0,6 à 0,8 μm, une surface spécifique d'après la méthode BET de 5 à 15 m²/g, une teneur en FeO de 26 à 29 % en poids et une teneur en manganèse de moins de 0,1 % en poids, par rapport au pigment noir.

2. Pigments noirs suivant la revendication 1, caractérisés en ce que la surface spécifique d'après la méthode BET va de 7 à 10 m²/g.

3. Pigments noirs suivant les revendications 1 ou 2, caractérisés en ce que la teneur en cuivre, antimoine, chrome, zinc, sulfate de baryum est inférieure à 0,01 % en poids pour chacun d'eux, elle ne dépasse pas pour l'ensemble 0,02 % en poids, la teneur en plomb est inférieure à 0,002 % en poids, la teneur en arsenic, sélénium, mercure est inférieure à 0,000 1 % en poids et la teneur en cadmium, tellure, thallium, uranium et chromate (VI) est inférieure à 0,000 05 % en poids.

4. Procédé de production de pigments noirs à base d'oxyde de fer suivant l'une des revendications 1 à 3, caractérisé en ce qu'on réduit du α-FeOOH ayant des surfaces spécifiques d'après la méthode BET de 10 à 20 m²/g et des largeurs moyennes d'aiguilles de 0,1 à 0,2 μm ainsi que des longueurs moyennes d'aiguilles de 0,6 à 0,8 μm, obtenu à partir de solutions de sel de fer par addition d'un alcali suivie d'une oxydation en deux étapes, à savoir l'étape de formation de germes et l'étape de croissance des pigments, à une température de 350 à 500 °C, de préférence de 400 à 450 °C, on le passive ensuite à une température de 25 à 250 °C, de préférence de 100 à 200 °C, dans une atmosphère à faible pression partielle d'oxygène et finalement on le broie.

5. Procédé de production de pigments noirs à base d'oxyde de fer suivant la revendication 4, caractérisé en ce que la formation de germes dans la production d'α-FeOOH se produit à 30-35 °C et la formation de pigments se produit à 70-90 °C.

6. Procédé de production de pigments noirs à base d'oxyde de fer suivant les revendications 4 ou 5, caractérisé en ce qu'un facteur de croissance de 10 à 15 est entretenu lors de la formation d'α-FeOOH.

7. Procédé de production de pigments noirs à base d'oxyde de fer suivant les revendications 4 à 6, caractérisé en ce que la réduction de l'α-FeOOH est effectuée dans un four tubulaire rotatif avec de l'hydrogène, avec addition de 10 à 30, de préférence 15 à 25, % en volume de vapeur d'eau.

8. Utilisation des pigments noirs suivant une ou plusieurs des revendications 1 à 7 pour la coloration de substrats tels que des peintures, des matières plastiques ou des matériaux de construction.

9. Utilisation des pigments noirs suivant une ou plusieurs des revendications 3 à 7 pour la coloration de substrats tels que des matières pour l'emballage des aliments, des jouets, des couleurs ou des cosmétiques.